Europäisches Patentamt

European Patent Office

Office européen des brevets

(19)

(11) Veröffentlichungsnummer: **0 264 673 B1**

(12) **EUROPÄISCHE PATENTSCHRIFT**

(45) Veröffentlichungstag der Patentschrift: 04.09.91

(51) Int. Cl.5: **B23C 3/00**

(21) Anmeldenummer: 87114240.2

(22) Anmeldetag: 30.09.87

(54) **Fräsverfahren und Fräswerkzeug.**

(30) Priorität: 08.10.86 CH 4020/86

(43) Veröffentlichungstag der Anmeldung:
27.04.88 Patentblatt 88/17

(45) Bekanntmachung des Hinweises auf die
Patenterteilung:
04.09.91 Patentblatt 91/36

(84) Benannte Vertragsstaaten:
AT BE CH DE ES FR GB IT LI NL SE

(56) Entgegenhaltungen:
FR-A- 1 508 244
GB-A- 2 079 656
US-A- 4 104 943

(73) Patentinhaber: **Starrfräsmaschinen AG**
**Seebleichestrasse 61**
**CH-9400 Rorschacherberg(CH)**

(72) Erfinder: **Breuer, Edgar**
**Thalerstrasse 84**
**CH-9400 Rorschacherberg(CH)**
Erfinder: **Gondek, Konrad**
**Sulzbachstrasse 23**
**CH-9400 Rorschacherberg(CH)**
Erfinder: **Schmid, Richard**
**Resedastrasse 5**
**CH-9400 Rorschacherberg(CH)**
Erfinder: **Costello, Philip**
**Resedastrasse 10**
**CH-9400 Rorschacherberg(CH)**
Erfinder: **Hauswirth, Andreas**
**Sonnenhalde 1157**
**CH-9410 Heiden(CH)**

(74) Vertreter: **EGLI-EUROPEAN PATENT ATTOR-**
**NEYS**
**Horneggstrasse 4**
**CH-8008 Zürich(CH)**

**Beschreibung**

Die Erfindung betrifft ein Fräsverfahren zur spanenden Bearbeitung von Werkstücken mit flachen oder gekrümmten Oberflächen gemäß Oberbegriff von Patentanspruch 1.

Von den bekannten Fräsverfahren zur Bearbeitung von gekrümmten Oberflächen ist wohl dasjenige das am häufigsten angewandte Verfahren, bei welchem ein Schaftfräser mit kugelförmigem Ende, als Kugelkopffräser bezeichnet, unter Einsatz von drei zueinander senkrecht stehenden translatorischen Bewegungsachsen auf ebenen oder räumlich gekrümmten Bahnen über das Werkstück geführt wird. Der räumliche Abstand des Kugelzentrums zu der zu erzeugenden Oberfläche wird dabei konstant gehalten.

Der Vorteil dieses Verfahrens besteht darin, dass es auf als Standard-Fräsmaschinen bezeichneten Fräsmaschinen mit einer entsprechenden Steuerung und entsprechenden Vorschubantrieben problemlos angewandt werden kann. Zudem bestehen nur wenig Kollisionsprobleme. Unter Kollisions problemen sind beim Fräsen auftretende Positionen des Fräsers und seiner Spindel zu verstehen, bei welchen der Fräser oder Teile der Fräsmaschine an unerwünschten Stellen in das Werkstück eindringen müssten. Sie treten vor allem an einspringenden Konturen auf und zu ihrer Vermeidung muss die Bearbeitung der Oberfläche abgebrochen werden.

Weiter sind bei diesem Verfahren verhältnismässig billige Werkzeuge verwendbar.

Nachteilig ist jedoch, dass eine sehr schlechte Anschmiegung zwischen dem Fräswerkzeug und dem Werkstück vorliegt. Aus diesem Grunde sind zur Erreichung einer bestimmten Rauhigkeit sehr viele Fräsbahnen erforderlich. Zudem liegen je nach der Ausbildung der Werkstückoberfläche günstige, aber auch häufig ungünstige Schnittverhältnisse vor.

Ein weiteres bekanntes Fräsverfahren ist das Umfangfräsen mit walzenförmigen oder scheibenförmigen Fräswerkzeugen. Beim Umfangfräsen mit walzenförmigen Fräswerkzeugen erfolgt der Vorschub in einer Richtung, die im wesentlichen senkrecht zur Achse des Fräswerkzeuges verläuft. Wegen der hier auftretenden Kollisionsprobleme ist dieses Verfahren nur auf einige spezielle Anwendungen beschränkt, wie z.B. das Erzeugen von rein zylindrischen Turbinenschaufelblättern oder das Bearbeiten von gewissen Kanten. Man versucht hierbei, die Werkzeugflanke möglichst optimal der Werkstückoberfläche anzuschmiegen. Diese Anschmiegung kann in einzelnen Anwendungsfällen durch den Einsatz von speziellen Formfräsern verbessert werden.

Beim Umfangfräsen mit scheibenförmigen Fräswerkzeugen kann der Vorschub im wesentlichen parallel oder senkrecht zur Fräserachse erfolgen. Vorteilhaft ist bei diesem Verfahren gegenüber jenem Verfahren, dass kräftigere Fräswerkzeuge eingesetzt werden können, die eine hohe Zerspanungsleistung ermöglichen. Dagegen ergeben sich auch hier Kollisionsprobleme, vor allem bei konkaven Formen, welche sowohl wegen der Lage der Frässpindel -die Fräserachse liegt im wesentlichen parallel zur Werkstückoberfläche oder ist nur schwach, im Maximum ca. 30° gegen diese geneigt - als auch dadurch auftreten, dass der Durchmesser des Fräswerkzeuges nicht unter ein bestimmtes Mass, etwa 25 mm, reduziert werden kann, wodurch bei konkaven Partien mit kleineren Krümmungsdurchmessern Kollisionsgefahr besteht. Im weiteren ist nachteilig, dass die Fräskraft in einem relativ steilen Winkel auf die Werkstückoberfläche wirkt, was bei dünnen, wenig formsteifen Werkstücken wie etwa bei Turbinenschaufeln zu Durchbiegungen, Schwingungen und Rattern führen kann. Auch dieses Verfahren wird, vor allem wegen der erwähnten Kollisionsprobleme, nur für spezielle Anwendungen eingesetzt, worunter die Bearbeitung von Turbinenschaufelblättern einen wichtigen Platz einnimmt.

Weiter sind als Sturzfräsen bezeichnete Fräsverfahren bekannt. Mit Sturz wird die Neigung der Fräserachse zur Oberflächennormalen im Berührungspunkt zwischen Fräser und Werkstückoberfläche bezeichnet. Die Richtung der Fräserachse wird dabei durch zwei Winkel beschrieben. Der eine Winkel wird durch die Fräserachse und die Oberflächennormale gebildet und wird mit Sturzwinkel bezeichnet. Der zweite Winkel besteht zwischen der Projektion der Fräserachse auf die Oberfläche, welche "Richtung des Sturzes" genannt wird, und der Vorschubrichtung.

Bei einem solchen bekannten Verfahren (CH-Patent 661 678) derselben Anmelderin zur Bearbeitung schaufelförmiger Werkstücke, von den die Erfindung ausgeht, werden die Schaufelkanten vorstehend erwähnte Umfangfräsen mit einem walzenförmigen Fräswerkzeug, z.B. einem Schaftfräser, entlang der Schaufelkanten-Mantellinien geformt, während die Schaufelbreitseiten mit der Stirnseite des Schaftfräsers mit Sturz in unterbrochenem Rundumfräsen bearbeitet werden, wobei die bereits geformten Schaufelblattkanten im Schnellgang überhüpft werden. Obwohl mit diesem Verfahren die Kollisionsprobleme nur unwesentlich schlechter gelöst werden als beim erstgenannten Verfahren und zudem bessere Zerspanungsleistungen erreicht werden können, entstehen jedoch durch das abgehobene Ueberspringen der Schaufelkanten immer noch beträchtliche Zeitverluste.

Bei einem weiteren bekannten Sturzfräsverfahren (DE-Patent 25 44 612) wird das schaufelförmige Werkstück mit einem quer zur Schaufelachse gestellten Stirnfräser mit Sturz bearbeitet, wobei der Vorschub rund um das Blatt erfolgt. Obwohl auch bei diesem Verfahren die Kollisionsprobleme nur unwesentlich schlechter gelöst werden als beim erstgenannten Verfahren und bessere Zerspanungsleistungen möglich sind, besteht der Nachteil, das beim Umfräsen der Schaufelkanten verhältnismässig viel Zeit verloren geht.

Beim Sturzfräsen, bei welchem ein konstanter Sturzwinkel eingehalten wird, tritt auf nicht endlosen Bahnen -endlose Bahnen können durch spiralförmige oder schraubenförmige Bewegungen entstehen - immer ein beträchtlicher Zeitverlust beim Überwechseln von einer Bahn zur nächsten auf, sei es im Fall, dass nur in einer Richtung gefräst wird und die Rückbewegung mit abgehobenem Werkzeug im Schnellgang erfolgt, oder sei es im Fall von Hin- und Her-Fräsen, bei welchem bei jedem Wenden mit Zeilensprung der Fräser abgehoben, die Richtung des Sturzwinkels um 180° gewendet und der Fräser wieder auf das Werkstück abgesenkt werden muss.

Hier setzt die Erfindung ein, der die Aufgabe zugrundeliegt, ein Verfahren der eingangs beschriebenen Art so auszugestalten, dass beliebige, einfach- oder doppelt gekrümmte Flächen, konvex oder konkav, durch Fräsen rasch und genau erzeugt werden können.

Diese Aufgabe wird durch ein Verfahren gemäß Patentanspruch 1 gelöst.

Die Erfindung umfasst somit auch einen Stirnfräser, mit welchem das erfindungsgemässe Verfahren optimal durchgeführt wird. Dieser besitzt an seiner Stirnseite eine Schneidengeometrie, die mindestens annähernd eine symmetrische Anordnung der Schneiden bezüglich der Normalen der zu bearbeiten bestimmten Oberfläche aufweist. Dadurch wird erreicht, dass die Schnittverhältnisse in beiden Bewegungsrichtungen bei unverändertem Sturzwinkel etwa gleich sind.

Ausführungsbeispiele der Erfindung sind in der Zeichnung dargestellt und nachfolgend beschrieben. Es zeigen:

Fig. 1 - 5    eine schematische Darstellung der Fräsverfahren nach dem Stand der Technik, hierbei in

Fig. 1    das Fräsen mit einem Kugelkopf-Schaftfräser,

Fig. 2    das Umfangfräsen mit einem walzenförmigen Fräser,

Fig. 3    das Umfangfräsen mit einem scheibenförmigen Fräser und

Fig. 4, 5    das Sturzfräsen.

Fig. 6    eine schematische Darstellung des Sturzfräsens mit Bearbeitung in Hin- und Herbewegung,

Fig. 7    eine schematische Darstellung des Sturzfräsens mit Bearbeitung in nur einer Richtung,

Fig. 8    das Fräsen nach dem erfindungsgemässen Verfahren beim Vorlauf,

Fig. 9    das Fräsen nach dem erfindungsgemässen Verfahren beim Rücklauf,

Fig. 10    eine schematische Darstellung des Stufenfräsens mit einem erfindungsgemässen Stirnfräser,

Fig. 11    eine schematische Darstellung des erfindungsgemässen Sturzfräsens mit Bearbeitung in ziehender Hin- und stossender Herbewegung,

Fig. 12    eine schematische Darstellung eines Kollisionsproblems,

Fig. 13    eine schematische Darstellung der Lösung des Kollisionsproblems nach Fig. 12

Fig. 14    eine schematische Darstellung eines, erfindungsgemässen Stirnfräsers,

Fig. 15    eine schematische Darstellung eines zweiten erfindungsgemässen Stirnfräsers und

Fig. 16    eine schematische Darstellung eines dritten erfindungsgemässen Stirnfräsers.

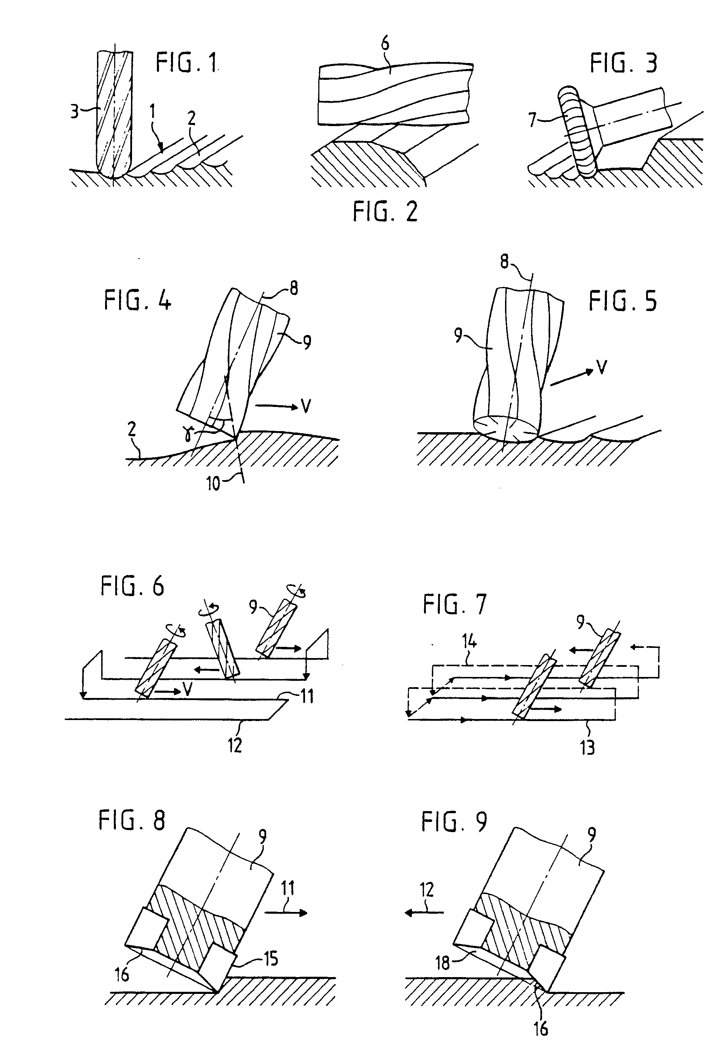

In Fig. 1 bis 5 sind die in der Einleitung erwähnten bekannten Fräsverfahren schematisch dargestellt, wobei Fig. 1 die Bearbeitung einer gekrümmten Oberfläche 2 eines Werkstücks 1 mit einem Kugelkopffräser 3 und Fig. 2 das Umfangfräsen mit einem verhältnismässig schlanken, walzenförmigen Schaftfräser 6 zeigen. In Fig. 2 erfolgt der Vorschub im wesentlichen senkrecht zur Fräserachse, wobei die Werkzeugflanke möglichst optimal der Werkzeugoberfläche angeschmiegt wird. Hier bestehen jedoch Kollisionsprobleme, wie dies eingangs geschildert wurde. Beim Umfangfräsen mit einem scheibenförmigen Werkzeug 7, siehe Fig. 3, kann der Vorschub im wesentlichen parallel oder senkrecht zur Fräserachse erfolgen. Hier ergeben sich die eingangs erwähnten Kollisionsprobleme, vor allem bei konkaven Oberflächen wegen der Frässpindel einerseits und des nicht unterschreitbaren Durchmessers des Fräsers andererseits.

Bei dem Sturzfräsen, siehe Fig. 4 und 5, ist die Achse 8 des Fräsers 9 gegenüber der Normalen 10 der Oberfläche 2 um den Sturz-Winkel $\gamma$ geneigt. Da die Vorschubrichtung V in Richtung der Neigung der Fräserachse erfolgt, wird hier mit einem ziehenden Schnitt gefräst, Fig. 5 zeigt die entstehenden, flachen Fräsbahnen.

Alle beschriebenen Fräsverfahren gemäss Fig. 1 bis 5 beruhen auf dem ziehenden Schnitt, bei dem durch entsprechende Vorwärtsneigung des zylindrischen Schaftfräsers zuverlässig ein Nachschneiden der hinteren Fräserkante vermieden werden soll, da der sich bei diesem Nachschneiden ergebende, stossende, drückende oder tauchende Schnitt der Fräserstirnseite als schlecht und unwirtschaftlich beurteilt wird und dementsprechend zu vermeiden ist. Auch bestehen, wie eingangs erwähnt wurde, teilweise Kollisionsprobleme.

Wegen der Auffassung, dass nur der ziehende Schnitt wegen seine Vorzüge allein zuzulassen ist, ergibt sich auch der beim Bearbeiten von Oberflächen entstehende Zeitverlust, siehe Fig. 6 und 7. Soll der Fräser 9 sowohl beim Vorlauf 11 als auch beim Rücklauf 12 mit ziehendem Schnitt fräsen, muss bei jedem Wenden mit Zeilensprung der Fräser abgehoben, die Richtung seiner Sturzneigung um 180° gewendet und der Fräser wieder auf das Werkstück abgesenkt werden. Zudem wird bei gleichbleibender Drehrichtung des Fräsers in der einen Fräsrichtung im Gleichlauf und in der anderen Fräsrichtung im Gegenlauf gefräst.

Wird dagegen nur in der einen Richtung 13 gefräst, siehe Fig. 7, erfolgt die Rückbewegung 14 mit abgehobenem Fräser im Schnellgang. In beiden Fällen entsteht jedoch ein entsprechender Zeitverlust.

Die Erfindung geht nun von der Ueberlegung aus, dass es möglich ist, das Sturzfräsen mit Richtung des Sturzes in beliebigem Winkel zur Vorschubrichtung durchzuführen, wenn hierzu ein geeigneter Stirnfräser verwendet wird. Damit wird es nun möglich, eine Fläche praktisch ohne durch Leerwege oder durch schlechten Zerspanungs-Wirkungsgrad bedingten Zeitverlust fertig zu fräsen. Wird beispielsweise diese überraschende Erkenntnis beim Hin- und Her-Sturzfräsen einer Oberfläche angewandt, so ergeben sich sowohl beim Vorlauf 11 mit ziehendem Schnitt, siehe Fig. 8, als auch beim Rücklauf 12 mit stossendem Schnitt, siehe Fig. 9,

- die gleichen Schnittbedingungen, d.h. nur Gleichlauf bzw. nur Gegenlauf,
- die gleichen Kollisionsverhältnisse, da sich die Stellung des Werkzeugs zum Werkstück beim Wenden überhaupt nicht ändert.

Aus Fig. 8 und 9 ist ersichtlich, dass der Fräser als gewöhnlicher Stirnfräser beim Vorlauf 11 und beim Rücklauf 12 unterschiedliche Eingriffsverhältnisse aufweist. Damit das Verfahren optimal ausgeführt werden kann, ist es erforderlich, den Fräser dergestalt auszubilden, dass er sowohl am Umfang 15 als auch auf der Stirnseite 16 schneidet und über einen genügenden Spanraum 18 verfügt.

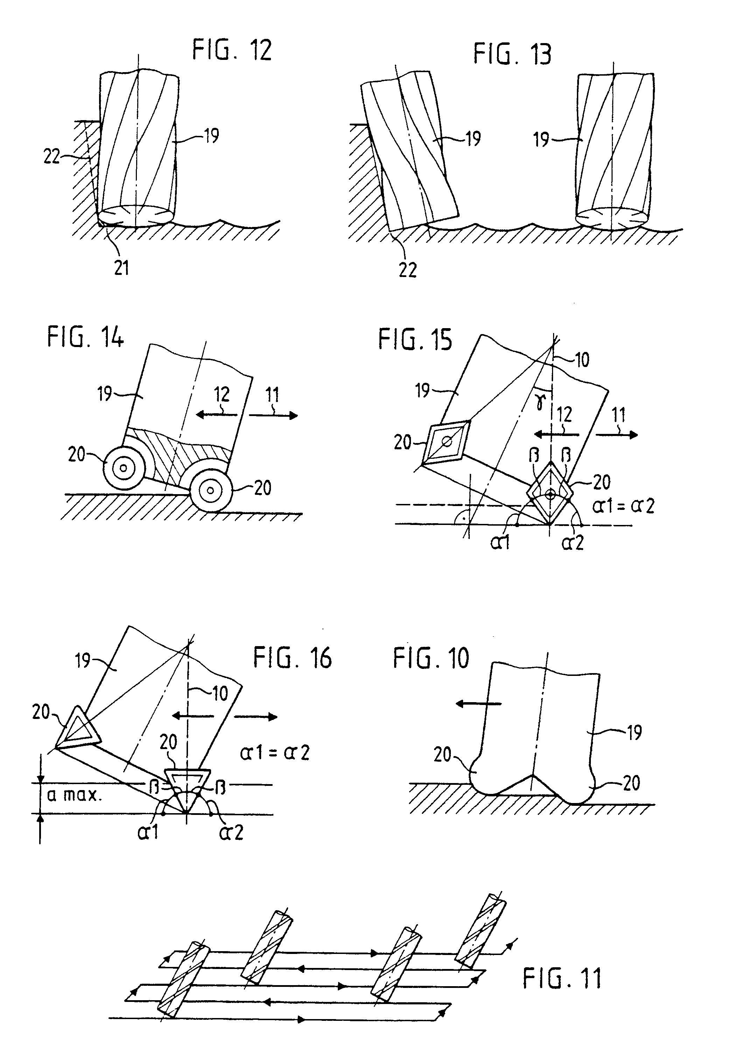

In den Figuren 8 und 9 wurde vorausgesetzt, dass die zu entfernende Materialschicht nur eine solche Stärke aufweist, dass beim stossenden Schnitt nur die hintere, untere Fräserpartie zum Schnitt kommt. Ist diese Bedingung nicht erfüllt, wird im Stoss- oder Tauchschnitt sowohl der vordere als auch der hintere Teil des Fräsers zum Eingriff kommen, siehe Fig. 10. Das Fräsen erfolgt somit in zwei Stufen, weshalb das Verfahren zweckmässig als Stufenfräsen bezeichnet wird. Die Bearbeitung einer Oberfläche erfolgt dann während des Stoss- oder Tauchfräsens als Stufenfräsen im Wechsel mit dem ziehenden Sturzfräsen.

Dadurch, dass nun sowohl im ziehenden wie im stossenden Schnitt gefräst werden kann, wird ein Hin- und Her-Fräsverfahren möglich, wie es in Fig. 11 dargestellt ist, bei welchem alle in den Verfahren gemäss Fig. 6 und 7 auftretenden Leerwege entfallen. Damit wird eine beträchtliche Zeitersparnis möglich.

In Fig. 14, 15 und 16 sind Stirnfräser 19 dargestellt, die den Anforderungen des beschriebenen Verfahrens in optimaler Weise genügen. Dies kann am besten anhand von Fig. 15 und 16 dargestellt werden. Die Normale 10 teilt den Winkel der beiden unteren Schneidkanten des Schneidplättchens 20 in zwei gleiche Winkel $\beta$. Dies bedeutet, dass auch die Winkel der Schneidkanten zur Oberfläche $\alpha_1$ und $\alpha_2$ gleich sind. Der Winkel entspricht dann dem Sturzwinkel. Die Verhältnisse ändern sich nicht, falls das rhombenförmige Schneidplättchen 20 durch ein quadratisches, dreieckförmiges oder ein kreisförmiges Schneidplättchen ersetzt wird. Diese geometrischen Eigenarten sind dabei keinesfalls auf Fräser mit Schneidplättchen beschränkt, sondern können auch an integralen Fräsern verwirklicht werden.

Mit einem derart ausgebildeten Fräser kann ein fünfachsiges Sturzfräsen mit ziehendem und stossendem Schnitt, ähnlich dem beschriebenen Verfahren, aber, dank der Einbeziehung einer vierten (Dreh-) und fünften (Kipp-)achse, mit konstantem Sturzwinkel bezüglich der lokalen Oberflächennormalen zur Werkstückoberfläche, durchgeführt werden. Während aber die Schnittbedingungen beim stossenden Schnitt mit hierzu nicht speziell ausgebildeten Fräsern normalerweise sehr ungünstig sind, ermöglicht das beschriebene Werkzeug ein qualitativ gleichwertiges Sturzfräsen mit stossendem oder tauchendem Schnitt wie das Sturzfräsen mit ziehendem Schnitt auszuführen. Wird das stossende oder tauchende Fräsverfahren, das auch als Stoss- oder Tauchfräsen mit negativem Sturz bezeichnet werden kann, im Wechsel mit dem ziehenden Sturzfräsen bei einer Hin- und Herbearbeitung angewandt, kann, wie erwähnt, eine Fläche fertig gefräst werden, ohne dass ein Zeitverlust durch Leerwege oder durch schlechten Zerspanungs-Wirkungsgrad eintritt. Wegen des Wechsels zwischen stossendem bzw. tauchendem und ziehendem Schnitt kann diese Art der Bearbeitung auch als Wechselfräsen (push and pull) bezeichnet werden. Die Art der Bearbeitung ist in Fig.

11 dargestellt.

Bei allen Sturzfräsverfahren, also auch beim vorliegenden Verfahren, ob ziehend oder stossend bzw. tauchend besteht der Nachteil, dass sie wegen der guten Anschmiegung des Fräsers an die Werkstückoberfläche unter gewissen Umständen eine schlechte Annäherung an einspringende Ekken, z.B. bei einer Wand, ermöglichen, siehe Fig. 12. Dort ergibt sich sowohl bei der Ecke 21 als auch bei der gestrichelt dargestellten Soll-Kontur der Wand 22 viel überflüssiges Material wegen Kollision des Fräsers 19 an der Ecke 21. Diesem Nachteil kann erfindungsgemäss dadurch begegnet werden, dass die in Bewegungsrichtung liegende Richtung des Sturzwinkels in der Nähe der Wand 22 in Querrichtung dazu gedreht wird, womit die einspringende Ecke 21 direkt der Fräserecke, welche kantig oder vorzugsweise gerundet sein kann, zugänglich wird und auch die ausgezogene Ist-Kontur der Soll-Kontur angenähert werden kann, siehe Fig. 13.

Eine besondere Bedeutung innerhalb der vorliegenden Erfindung hat die Ausbildung der Schneiden in der Form von Kreisen bzw. Kreisbögen, s. Fig. 10 und 14. Dadurch, dass mit dieser Geometrie die Symmetriebedingung bei allen Sturzwinkeln erfüllt ist, eignet sie sich speziell für die Bearbeitung schwieriger Werkstücke, bei denen die Beibehaltung eines konstanten Sturzwinkels nicht immer möglich ist.

Aus dem gleichen Grunde kann diese Schneidengeometrie zum Sturzfräsen gemäss Fig. 10 verwendet werden, welches Fräsverfahren bei grossen Materialzugaben den Einsatz kleiner Sturzwinkel, d.h. flacher Fräszeilen, im stossenden Schnitt gestattet. Der Effekt des Stufenfräsens wird dabei nicht durch eine besondere Ausbildung des Werkzeuges erreicht, sondern durch das Verhältnis von Schnittiefe zu Anstellhöhe, d.h. eine Funktion des Sturzwinkels des Werkzeugdurchmessers und des Eckenradius. Daher ist es auch möglich, die Schnittiefe des Schlichtschnittes zwischen einem Maximum und Null beliebig zu wählen. Ausserdem sind beim Sturzfräsen mit Sturz. Umschlingungswinkel bis zu 360° möglich, so dass der Fräsprozess wegen der besonderen Eingriffsverhältnisse, äusserst ruhig ist. Beim bekannten Umfang-Sturzfräsen liegt das Maximum höchstens etwa bei 180°.

## Patentansprüche

1. Verfahren zum Fräsen von flachen oder gekrümmten Werkstück-Oberflächen auf einer Fräsmaschine, wobei die Werkstück-Oberflächen mit einem Fräser bei ziehendem und stossendem Schnitt bearbeitet werden, mit welchem ein Sturzwinkel eingehalten wird, dadurch gekennzeichnet, dass der als Stirnfräser ausgebildete Fräser auf einer fünfachsigen Fräsmaschine derart geführt ist, dass gegenüber der Normalen den zu bearbeitenden WerkstückOberfläche ein konstanter Sturzwinkel sowohl beim ziehenden als auch beim stossenden Schnitt unverändert eingehalten wird und wobei bei dem Fräser eine Schneidengeometrie eingehalten wird, die mindestens annährend eine symetrische Anordnung der innenseitigen und aussenseitigen Schneiden bezüglich der Normalen der zu bearbeiten bestimmten Oberfläche aufweist.

2. Verfahren nach Anspruch 1, dadurch gekennzeichnet, dass bei einem zeilenförmigen Bearbeiten der Werkstück-Oberfläche im Hin- und Her Verfahren, unter Vermeidung jeglicher Leerwege, der Sturtzwinkel beim Aendern der Bewegungsrichtung im wesentlichen in Richtung der Vorschubbewegung oder entgegen der Vorschubbewegung gehalten wird.

3. Verfahren nach Anspruch 1, dadurch gekennzeichnet, dass bei dem Fräser die Schneidengeometrie polygonförmig ausgebildet wird, wobei die Winkelhalbierende der zwei benachbarten, zum Fräsen bestimmten Schneiden zur Drehachse des Fräsers mit einem etwa dem Sturzwinkel entsprechenden Winkel geneigt wird.

4. Verfahren nach Anspruch 1 oder 2, dadurch gekennzeichnet, dass beim Fräsen von Turbinenschaufeln die beiden Bewegungsrichtungen des Fräsers in Längsrichtung der Turbinenschaufeln gewählt werden.

## Claims

1. Process for milling flat or curved workpiece surfaces on a milling machine, wherein the workpiece surface is machined with a milling cutter with both drawing and pushing cutting, in which a camber angle is maintained, characterised in that the milling cutter constructed as an end mill is guided on a five axis milling machine in such a way that, with respect to the normal to the workpiece surface to be machined, a constant camber angle is maintained unchanged both on drawing and also on pushing cutting and wherein, in the case of the milling cutter, a cutter geometry is maintained which has at least substantially a symmetrical arrangement of the inner side and outer side cutting with respect to the normal to the surface to be machined.

2. Process according to Claim 1, characterised in that in the case of line-by-line working of the workpiece surface going to and fro, with the avoidance of any unused paths, the camber angle is maintained on changing the direction of movement essentially in the direction of the feed movement or counter to the feed movement.

3. Process according to claim 1, characterised in that, in the case of the milling cutter, the cutter geometry is constructed polygonally, wherein the bisector of two neighbouring cuts destined for milling is inclined relative to the rotational axis of the milling cutter with an angle roughly corresponding to the camber angle.

4. Process according to Claim 1 or 2, characterised in that, in milling turbine blades, both the directions of movement of the milling cutter are chosen to be in the longitudinal direction of the turbine blades.

**Revendications**

1. Procédé de fraisage, sur une fraiseuse, de pièces à usiner comportant des surfaces externes planes ou gauches, les surfaces étant usinées avec une fraise travaillant avec une coupe en avalant ou en remontant, avec maintien d'un angle de renversement, caractérisé en ce que la fraise, réalisée sous la forme d'une fraise en bout, est montée sur une fraiseuse à cinq broches, de telle façon que, par rapport à la normale à la surface de la pièce à usiner, soit maintenu inchangé un angle de renversement constant, aussi bien lors de l'usinage en avalant qu'en remontant, et étant entendu qu'en ce qui concerne la fraise, on maintient une géométrie des taillants présentant au moins de façon approchée, une disposition symétrique des taillants côté intérieur et côté extérieur par rapport à la normale de la surface destinée à être usinée.

2. Procédé suivant la revendication 1, caractérisé en ce que lors d'un usinage, suivant des lignes, de la surface d'une pièce à usiner, en procédant par va-et-vient, en évitant toute course à vide, l'angle de renversement est, quand on change le sens du mouvement, essentiellement maintenu dans la direction du mouvement d'avance, ou dans la direction opposée au mouvement d'avance.

3. Procédé suivant la revendication 1, caractérisé en ce qu'en ce qui concerne la fraise, la géométrie des taillants est réalisée sous forme polygonale, étant entendu que la bissectrice de l'angle des deux taillants voisins destinés au fraisage est inclinée, par rapport à l'axe de rotation de la fraise, d'un angle correspondant sensiblement à l'angle de renversement.

4. Procédé suivant la revendication 1 ou 2, caractérisé en ce que, lors du fraisage d'ailettes de turbines, les deux directions de déplacement de la fraise sont choisies suivant la direction longitudinale des ailettes de turbines.

FIG. 1

FIG. 2

FIG. 3

FIG. 4

FIG. 5

FIG. 6

FIG. 7

FIG. 8

FIG. 9

FIG. 12

FIG. 13

FIG. 14

FIG. 15

FIG. 16

FIG. 10

FIG. 11